# FASCICULE DE BREVET EUROPEEN

(11) **EP 2 286 581 B1**
(45) Date de publication et mention de la délivrance du brevet: **27.03.2013**
(21) Numéro de dépôt: 09753739.3
(22) Date de dépôt: 15.04.2009
(51) Int. Cl.: H04N 5/32

(54) **PROCEDE DE SYNCHRONISATION POUR LIAISON SANS FIL ET SYSTEME RADIOLOGIQUE UTILISANT UN TEL PROCEDE**
SYNCHRONISATIONSVERFAHREN FÜR DRAHTLOSE VERBINDUNG UND RÖNTGENSYSTEM MIT DIESEM VERFAHREN
SYNCHRONISATION METHOD FOR WIRELESS LINK AND X-RAY SYSTEM USING SUCH A METHOD

(30) Priorité: 27.05.2008 FR 0802873
(43) Date de publication de la demande: 23.02.2011
(73) Titulaire: Trixell S.A.S., 38430 Moirans (FR)
(72) Inventeur: CLAVERIE, Nicolas, F-38210 Tullins (FR)
(74) Mandataire: Collet, Alain
(86) Numéro de dépôt international: PCT/EP2009/054456
(87) Numéro de publication internationale: WO 2009/144084

(56) Documents cités:
- US-A1- 2006 023 839

## Description

L'invention concerne un procédé de synchronisation entre une station de base comprenant une source de rayonnement ionisant, comme par exemple un tube à rayons X, permettant de générer un rayonnement X et une cassette mobile comprenant un détecteur de rayonnement X permettant de fournir une image fonction du rayonnement X reçu. L'invention concerne en particulier un procédé de synchronisation pour une liaison sans fil. L'invention concerne également un système radiologique comprenant une station de base, une cassette mobile et des moyens de communication sans fil entre la station de base et la cassette. Un tel système peut être utilisé dans de nombreuses applications telles que par exemple la radiologie médicale et le contrôle non destructif.

Par le passé, les systèmes radiologiques étaient volumineux et peu mobiles. Il était nécessaire de positionner l'objet par rapport au système radiologique pour obtenir une image de son contenu ou de sa composition. Avec l'apparition de détecteurs à l'état solide, par exemple décrits dans la demande de brevet français FR 2 796 239, le détecteur est devenu moins volumineux et il a été possible de déplacer le détecteur par rapport à un objet restant fixe. Un détecteur à l'état solide comprend notamment un scintillateur et une pluralité d'éléments photosensibles généralement disposés en matrice. Le scintillateur est interposé entre le rayonnement X et les éléments photosensibles pour convertir le rayonnement X en rayonnement optique dans la bande de longueurs d'onde auxquels les éléments photosensibles sont sensibles. Chaque élément photosensible est formé d'une diode photosensible montée en série avec un élément à fonction d'interrupteur tel qu'une diode ou un transistor et est connecté entre un conducteur de ligne et un conducteur de colonne. Durant la phase de prise d'image, les éléments photosensibles sont exposés à un signal à capter et durant la phase de lecture, une impulsion de lecture est successivement appliquée aux conducteurs de ligne pour lire la quantité de charges accumulée lors de la prise d'image. Pour la radiologie médicale en particulier, on a réalisé des détecteurs numériques sous forme de cassettes mobiles qu'il devient possible de placer à proximité immédiate d'un patient dont on veut réaliser une image radiologique, notamment lorsque l'état de santé du patient empêche son déplacement vers une salle réservée à la radiologie.

Dans un premier temps, la cassette était reliée à la station de base par une liaison filaire. Pour l'acquisition d'une image radiologique, la station de base envoyait des signaux à la cassette pour commander le début et la fin de l'acquisition du rayonnement, l'intervalle de temps entre le début et la fin de l'acquisition du rayonnement étant appelé fenêtre d'acquisition. La liaison filaire permettait une parfaite synchronisation entre la source de rayonnement X et le détecteur de rayonnement X mais restreignait la mobilité et la facilité d'utilisation du système radiologique. Par conséquent, la liaison filaire a été remplacée par une liaison sans fil de type Wifi, "Wifi" étant le nom commercial pour la série de normes IEEE 802.11 où "IEEE" est l'acronyme anglo-saxon de "Institute of Electrical and Electronics Engineers".

Cependant, les liaisons sans fil basées sur une norme IEEE 802.11 ne permettent pas de synchronisation entre les différents équipements. En particulier, des délais de transmission entre la station de base et la cassette peuvent empêcher la synchronisation entre la source de rayonnement X et le détecteur de rayonnement X. Cette désynchronisation peut se traduire par un décalage entre la génération d'un rayonnement X par la source de rayonnement et sa détection par le détecteur de rayonnement X. Dans le cas où le rayonnement débute avant le début de sa détection, une dose de rayons X est envoyée vers la cassette alors que le détecteur de rayonnement X n'enregistre aucune image radiologique. Par conséquent, le patient est exposé inutilement pendant la période située entre le début du rayonnement et le début de sa détection. De même, dans le cas où le rayonnement se poursuit après la fin de sa détection, le patient est exposé inutilement pendant la période située entre la fin de la détection du rayonnement et la fin de sa génération. Dans ce dernier cas, l'image radiologique peut être dégradée, en particulier si le détecteur de rayonnement X est un détecteur à l'état solide et qu'il est exposé aux rayons X pendant la phase de lecture des quantités de charges accumulées.

Par ailleurs, la transmission entre la station de base et la cassette peut échouer. Dans le cas particulier où la transmission échoue alors que la station de base envoie une requête d'acquisition d'une image radiologique au détecteur de rayons X, une dose de rayons X est envoyée vers la cassette alors que le détecteur de rayons X n'enregistre aucune image radiologique. Le patient est ainsi exposé inutilement à cette dose de rayons X. De même, si le signal commandant la fin de l'acquisition n'est pas reçu par la cassette, le détecteur de rayons X peut enregistrer un rayonnement qui n'est pas destiné à l'image radiologique concernée, dégradant ainsi cette image. Un échec de transmission entre la station de base et la cassette est d'autant plus probable que les puissances radio émises en environnement médical sont strictement limitées afin, notamment, de ne pas perturber des systèmes électro-médicaux voisins.

Le document US 2006/023839 A1 décrit un procédé de vérification d'une liaison sans fil dans un système radiographique comprenant une cassette, un appareil d'irradiation et des moyens de contrôle. Selon ce procédé, la cassette envoie un signal de communication à l'appareil d'irradiation, qui répond à la cassette par un signal de réponse. Le processus d'acquisition d'une image ne continue que si la cassette reçoit le signal de réponse dans un intervalle de temps prédéterminé. Un signal de fin d'irradiation est envoyé par la cassette à l'appareil d'irradiation une fois que la dose de rayons X reçue a dépassé une valeur prédéterminée.

Un but de l'invention est notamment de pallier tout ou partie des inconvénients précités en proposant un système radiologique s'assurant de la bonne transmission entre la station de base et la cassette. A cet effet, l'invention a pour objet un procédé de synchronisation entre une station de base et une cassette mobile d'un système radiologique tel que décrit dans la revendication 1.

En d'autres termes, le procédé comporte des étapes d'échange de messages entre la station de base et la cassette, les échanges lançant des décomptes de temps dans la station de base et la cassette, une séquence de rayonnement et une séquence image étant exécutées à la fin des décomptes de temps respectifs.

L'invention a également pour objet un système radiologique tel que décrit dans la revendication 7.

L'invention a notamment pour avantage qu'elle permet de ne soumettre un patient à une dose de rayons X que si les rayons X émis par la source de rayonnement X peuvent être perçus et enregistrés par le détecteur de rayonnement X afin de fournir une image radiologique.

L'invention sera mieux comprise et d'autres avantages apparaîtront à la lecture de la description détaillée d'un mode de réalisation donné à titre d'exemple, description faite en regard de dessins annexés qui représentent :
- la figure 1, un synoptique d'un système radiologique selon l'invention ;
- la figure 2, un organigramme du procédé de synchronisation selon l'invention,
- la figure 3, sous forme de chronogramme, un exemple de mise en oeuvre du procédé de synchronisation selon l'invention.

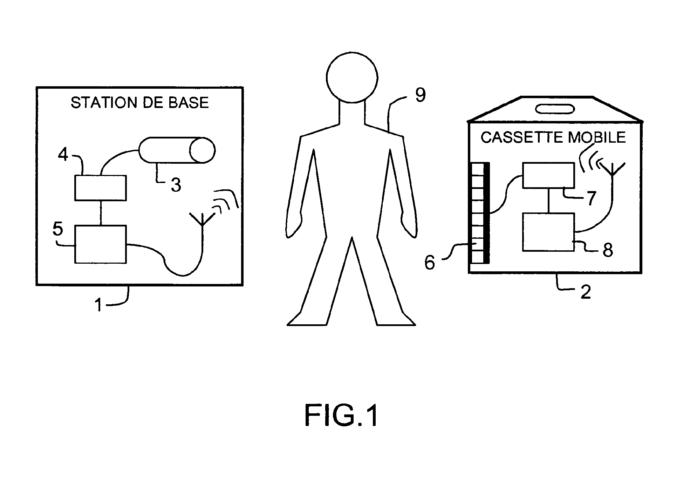

La figure 1 représente un synoptique d'un système radiologique selon l'invention. Pour la suite de la description, on considérera que le système radiologique est utilisé à des fins médicales, en présence d'un patient dont on souhaite obtenir une image radiologique. Cependant, l'invention peut tout aussi bien s'appliquer à d'autres domaines de l'imagerie radiologique, par exemple industrielle. Le système radiologique comporte une station de base 1 et une cassette 2 mobile. La station de base 1 comporte un générateur de rayonnement X 3 géré par un module de gestion de rayonnement 4. Le module de gestion de rayonnement 4 est relié à un module radio 5 permettant un dialogue entre la station de base 1 et la cassette 2.

La cassette 2 comprend un détecteur de rayonnement X 6 relié à un module de gestion de détection 7. Le détecteur de rayonnement X 6 est par exemple réalisé sous forme d'un panneau plat. Il est adapté pour pouvoir générer une image radiologique à partir du rayonnement émis par le générateur de rayonnement X 3. Le module de gestion de détection 7 est lui-même relié à un module radio 8.

Les modules radio 5 et 8 forment des moyens de communication sans fil entre la station de base 1 et la cassette 2. Ces moyens de communication sans fil permettent de transférer des données aussi bien de la station de base 1 vers la cassette 2 que de la cassette 2 vers la station de base 1. Les données transférées concernent par exemple des demandes d'acquisition d'une image radiologique, des messages d'accusé de réception (AR) ou des images radiologiques obtenues par le détecteur de rayonnement X 6. Selon une forme particulière de réalisation, les modules radio 5 et 8 échangent des données en utilisant un protocole de transfert basé sur une norme IEEE 802.11. La puissance instantanée de rayonnement émis peut être limitée afin de perturber le moins possible des systèmes électro-médicaux voisins.

Un patient 9 peut être situé entre la station de base 1 et la cassette 2. Du fait des moyens de communication sans fil, la cassette 2 peut être facilement déplacée à proximité du patient 9 afin de prendre une image radiologique d'une partie particulière du patient 9. Avantageusement, le générateur de rayonnement X 3 est désolidarisé de la station de base 1 et relié à celle-ci par une liaison filaire afin de faciliter le positionnement du générateur de rayonnement X 3 et celui du détecteur de rayonnement X 6 par rapport au patient 9.

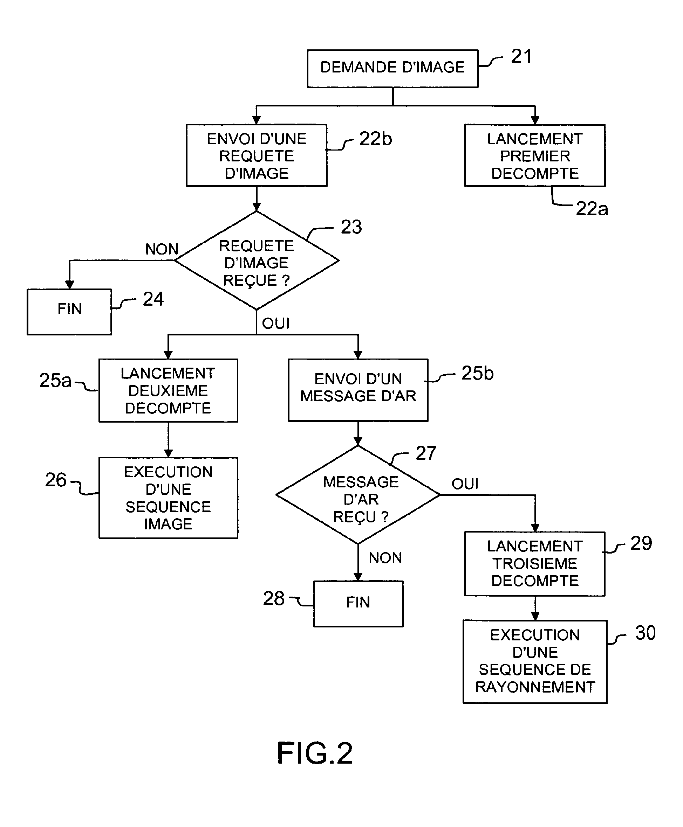

La figure 2 représente un organigramme du procédé de synchronisation selon l'invention. Dans une étape 21, un utilisateur du système radiologique demande l'acquisition d'une image radiologique à partir de la station de base 1. La demande d'acquisition de l'image est transmise au module de gestion de rayonnement 4, lequel, dans une étape 22a, lance dans la station de base 1 un premier décompte de temps d'une durée maximale Tₘₐₓ prédéterminée et, simultanément, dans une étape 22b, transmet une requête d'image à la cassette 2, en particulier au module de gestion de détection 7 par l'intermédiaire des modules radio 5 et 8. Le décompte de temps consiste par exemple à décrémenter d'une unité, toutes les millisecondes, une valeur contenue dans une mémoire. Cette valeur est déterminée afin d'obtenir la durée Tₘₐₓ souhaitée, par exemple de l'ordre de 300 millisecondes. Le décompte de temps de durée Tₘₐₓ peut évidemment être obtenu selon tout autre procédé sans sortir pour autant du cadre de l'invention. En particulier, par décompte de temps, on peut également entendre un comptage croissant d'une variable entre une valeur de départ et une valeur d'arrivée, le comptage étant interrompu lorsque la variable atteint la valeur d'arrivée. Dans une étape 23, on vérifie que la requête d'image a bien été reçue par la cassette 2. Si la requête d'image n'a pas été reçue, il est mis fin au procédé de synchronisation dans une étape repérée par la référence 24 et aucun rayonnement ne sera émis par le générateur de rayonnement X 3. Si la requête d'image est reçue par la casette 2, son module de gestion de détection 7, dans une étape 25a, lance un deuxième décompte de temps d'une durée T₁ dans la cassette 2 et, simultanément, dans une étape 25b, envoie un message d'accusé de réception (AR) au module de gestion de rayonnement 4 par l'intermédiaire des modules radio 5 et 8. Le deuxième décompte de temps peut être réalisé de manière semblable au premier décompte de temps de durée Tₘₐₓ. De même, le deuxième décompte de temps peut être obtenu par tous moyens. En particulier, il peut consister en une suite d'opérations dont la durée d'exécution est égale à la durée T₁. Cette suite d'opérations peut notamment permettre de préparer la cassette 2 à une séquence image. A la fin du deuxième décompte de temps, le module de gestion de détection 7 envoie un signal au détecteur de rayonnement X 6 pour exécuter, dans une étape 26, une séquence image, pendant une durée Tᵢₘₐ. Cette durée Tᵢₘₐ correspond à la fenêtre d'acquisition, autrement dit au temps pendant lequel le détecteur de rayonnement X 6 doit enregistrer le rayonnement lui parvenant. La durée Tᵢₘₐ dépend principalement du temps pendant lequel un rayonnement est émis par le générateur de rayonnement X 3. Selon un mode particulier de réalisation, la durée Tᵢₘₐ est prédéterminée, aucun échange entre la station de base 1 et la cassette 2 n'étant alors plus nécessaire après le début de la séquence image pour mettre fin à cette séquence image. Avantageusement, la durée Tᵢₘₐ est envoyée par la station de base 1 en même temps que la requête d'image. Dans une étape 27, on vérifie que le message d'AR a bien été reçu par la station de base 1 avant l'expiration du premier décompte de temps de durée Tₘₐₓ. S'il n'a pas été reçu avant l'expiration du premier décompte de temps, il est mis fin au procédé de synchronisation dans une étape repérée par la référence 28 et aucun rayonnement ne sera émis par le générateur de rayonnement X 3. Si le message d'AR est reçu par le module de gestion de rayonnement 4 avant l'expiration du premier décompte de temps, un troisième décompte de temps d'une durée T₂ est lancé dans la station de base 1. Cette étape est référencée 29 sur la figure 2. A la fin du troisième décompte de temps, le module de gestion de rayonnement 4 envoie un signal au générateur de rayonnement X 3 pour exécuter, dans une étape 30, une séquence de rayonnement pendant une durée T_{ray} prédéterminée. Cette durée T_{ray} correspond au temps pendant lequel le générateur de rayonnement X 3 doit émettre un rayonnement X. Elle est déterminée par un radiologue en fonction de plusieurs paramètres, notamment la partie du patient soumise au rayonnement X et la morphologie du patient. La durée T_{ray} est généralement inférieure à la durée Tᵢₘₐ de la séquence image afin de s'assurer que tout le rayonnement est enregistré par le détecteur de rayonnement X 6. En d'autres termes, la durée T_{ray} est incluse dans la durée Tᵢₘₐ. La durée T_{ray} est en général comprise entre une demi-seconde et quelques secondes.

Selon l'invention, la transmission entre la station de base 1 et la cassette 2 est vérifiée avant d'exécuter une séquence de rayonnement et le patient 9 n'est soumis à une dose de rayonnement que si la transmission est correcte. Dans le cas où la cassette 2 reçoit la requête d'image mais que le message d'AR n'est pas reçu par la station de base 1, une séquence image est exécutée sans qu'un rayonnement ne soit émis.

Dans un mode particulier de réalisation, des informations relatives au rayonnement X reçu par le détecteur de rayonnement X 6, par exemple représentées sous forme de charges accumulées dans des éléments photosensibles, sont lues après la fin de la séquence de rayonnement. Ce mode de réalisation empêche que le détecteur de rayonnement X 6 ne reçoive des rayons X pendant la phase de lecture. Ceci est obtenu en particulier grâce aux premier, deuxième et troisième décomptes de temps. L'image radiologique ainsi lue peut être transmise à la station de base 1 par l'intermédiaire des modules radio 5 et 8 afin d'être exploitée.

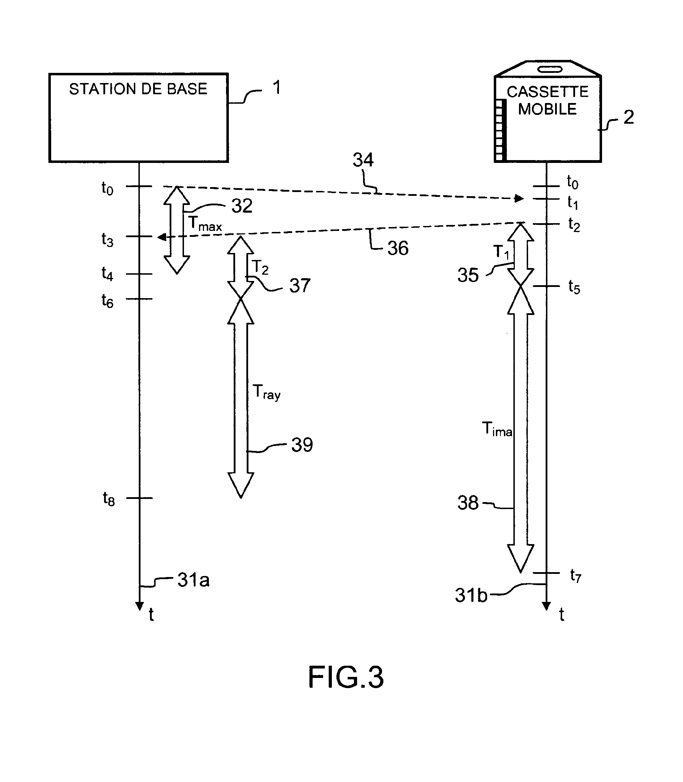

La figure 3 représente un exemple de mise en oeuvre du procédé selon l'invention. Un premier axe des temps 31 a permet de repérer les différents temps concernant la station de base 1 et un deuxième axe des temps 31 b permet de repérer les temps concernant la cassette 2. Pour une meilleure lisibilité, les axes des temps 31a et 31 b sont représentés séparément ; cependant, les différents instants impliqués sont repérés par rapport à un même instant t₀.

A la demande d'acquisition d'une image à l'instant t₀, le premier décompte de temps 32 d'une durée maximale Tₘₐₓ est lancé. Simultanément, la requête d'image 34 est envoyée à la cassette 2. La cassette 2 reçoit cette requête d'image 34 à un instant t₁, la durée t₁-t₀ correspondant au délai de transmission entre la station de base 1 et la cassette 2. A un instant t₂, soit après une durée t₂-t₁ correspondant à une durée de traitement de la requête d'image 34, le deuxième décompte de temps 35 de durée T₁ est lancé. A ce même instant t₂, le message d'AR 36 est envoyé à la station de base 1 qui le reçoit à un instant t₃, la durée t₃-t₂ correspondant au délai de transmission entre la cassette 2 et la station de base 1. Dans cet exemple, on considère que le message d'AR 36 est reçu avant l'expiration du décompte de temps 32 intervenant à un instant t₄. Par conséquent, le troisième décompte de temps 37 de durée T₂ est lancé.

On note t₅ et t₆, respectivement, les instants auxquels expirent les deuxième et troisième décomptes de temps 35 et 37. Les durées T₁ et T₂ étant supérieures, dans un rapport de 1 à 10, aux durées de transmission entre la station de base 1 et la cassette 2, en particulier la durée t₃-t₂, les durées T₁ et T₂ peuvent être égales sans introduire de décalage significatif entre les instants t₅ et t₆.

A l'instant t₅, la séquence image 38 débute pour poursuivre jusqu'à un instant t₇, soit pendant la durée Tᵢₘₐ. De même, à l'instant t₆, la séquence de rayonnement 39 débute pour poursuivre jusqu'à un instant t₈, soit pendant la durée T_{ray}.

Selon l'invention, les durées T₁ et T₂ sont sensiblement égales, par exemple de l'ordre de 100 millisecondes, afin d'expirer sensiblement en même temps. Cependant, du fait de la durée de transmission (t₃-t₂) entre la cassette 2 et la station de base 1, la séquence image 38 débute toujours avant la séquence de rayonnement 39. De ce fait, tout le rayonnement X émis au début de la séquence de rayonnement 39 est reçu par le détecteur de rayonnement X 6.

Selon un mode particulier de réalisation, la durée Tᵢₘₐ de la séquence image 38 est égale à la somme de la durée T_{ray} de la séquence de rayonnement 39 et de la durée Tₘₐₓ. Ce mode particulier de réalisation permet au détecteur de rayonnement X 6 de recevoir tout le rayonnement X émis pendant la durée T_{ray}. Par conséquent, le patient 9 n'est pas soumis inutilement aux rayons X et le détecteur de rayonnement X 6 ne reçoit plus de rayonnement X pendant sa phase de lecture.

## Revendications

1. Procédé de synchronisation entre une station de base (1) et une cassette (2) mobile d'un système radiologique, la station de base (1) comportant un générateur de rayonnement X (3) et la cassette (2) comportant un détecteur de rayonnement X (6), la station de base (1) et la cassette (2) étant en liaison sans fil, le procédé étant **caractérisé en ce qu'**il comprend les étapes suivantes :
- envoyer (22b) de la station de base (1) une requête d'image (34) vers la cassette (2) et lancer (22a) simultanément dans la station de base (1) un premier décompte de temps (32) d'une durée maximale Tₘₐₓ prédéterminée,
- à la réception de la requête d'image (34) par la cassette (2), envoyer (25b) de la cassette (2) un message d'accusé de réception (36) vers la station de base (1) et lancer (25a) simultanément un deuxième décompte de temps (35) d'une durée T₁ dans la cassette (2),
- à la fin du deuxième décompte de temps (35), exécuter (26) une séquence image (38) par le détecteur de rayonnement X (6),
- dans le cas où la station de base (1) reçoit le message d'accusé de réception (36) avant l'expiration du premier décompte de temps :
o lancer (30) dans la station de base (1) un troisième décompte de temps (37) d'une durée T₂, les durées T₁ et T₂ des deuxième et troisième décomptes de temps (35, 37) étant sensiblement égales de manière à ce que la séquence image (38) débute toujours avant la séquence de rayonnement (39),
o à la fin du troisième décompte de temps (37), exécuter (30) une séquence de rayonnement (39) par le générateur de rayonnement X (3) pendant une durée T_{ray} prédéterminée
- dans le cas où la station de base (1) ne reçoit pas le message d'accusé de réception (36) avant l'expiration du premier décompte de temps, mettre fin (28) au procédé de synchronisation, la séquence de rayonnement (39) n'étant pas exécutée.

2. Procédé selon la revendication 1, **caractérisé en ce que** la séquence image (38) est exécutée pendant une durée Tᵢₘₐ prédéterminée, la durée T_{ray} étant incluse dans la durée Tᵢₘₐ.

3. Procédé selon la revendication 2, **caractérisé en ce que** la durée Tᵢₘₐ est égale à la somme des durées T_{ray} et de la durée Tₘₐₓ.

4. Procédé selon l'une quelconque des revendications précédentes, **caractérisé en ce que**, dans le cas où la requête d'image (34) n'est pas reçue par la cassette (2), il est mis fin (24) au procédé de synchronisation, la séquence de rayonnement (39) n'étant pas exécutée.

5. Procédé selon l'une quelconque des revendications précédentes, **caractérisé en ce que** la station de base (1) et la cassette (2) comprennent chacun un module radio (5, 8) permettant une liaison sans fil répondant à la norme IEEE 802.11.

6. Procédé selon l'une quelconque des revendications précédentes, **caractérisé en ce que**, après la fin de la séquence de rayonnement (39), le procédé comporte une étape consistant à lire des informations relatives au rayonnement X reçu par le détecteur de rayonnement X (6).

7. Système radiologique comprenant :
- une station de base (1) comprenant un générateur de rayonnement X (3),
- une cassette (2) mobile comprenant un détecteur de rayonnement X (6),
- des moyens de communication sans fil (5, 8) entre la station de base (1) et la cassette (2),
le système radiologique étant **caractérisé en ce qu'**il comprend :
- des moyens (5) pour envoyer de la station de base (1) une requête d'image (34) vers la cassette (2),
- des moyens pour lancer un premier décompte de temps (32) d'une durée Tₘₐₓ dans la station de base (1) simultanément à l'envoi de la requête d'image (34),
- des moyens (8) pour envoyer un message d'accusé de réception (36) de la cassette (2) vers la station de base (1) à la réception de la requête d'image (34) par la cassette (2),
- des moyens pour lancer un deuxième décompte de temps (35) d'une durée T₁ dans la cassette (2) simultanément à l'envoi de l'accusé de réception (36),
- des moyens (7) pour commander, à la fin du deuxième décompte de temps (35), une séquence image (38) pendant une durée Tᵢₘₐ prédéterminée,
- des moyens pour lancer un troisième décompte de temps (37) d'une durée T₂ dans la station de base (1) dans le cas où la station de base (1) reçoit le message d'accusé de réception (36) avant l'expiration du premier décompte de temps (32), les durées T₁ et T₂ des deuxième et troisième décomptes de temps (35, 37) étant sensiblement égales de manière à ce que la séquence image (38) débute toujours avant la séquence de rayonnement (39),
- des moyens (4) pour commander, à la fin du troisième décompte de temps (37), une séquence de rayonnement (39) pendant une durée T_{ray} prédéterminée.
- des moyens pour ne pas exciter la séquence de rayonnement dans le cas où la station de base ne reçoit pas le message d'accusé de réception avant l'expiration du premier décompte de temps.

## Claims

1. A method for synchronising between a base station (1) and a mobile cassette (2) of a radiological system, said base station (1) comprising an X-ray generator (3) and said cassette (2) comprising an X-ray detector (6), said base station (1) and said cassette (2) being wirelessly connected, said method being **characterised in that** it comprises the following steps:
- sending (22b) an image request (34) from said base station (1) to said cassette (2) and simultaneously launching (22a), in said base station, a first timer (32) of predetermined maximum duration Tₘₐₓ;
- sending (25b) an acknowledgement of receipt message (36) from said cassette (2), upon receipt of said image request (34) by said cassette (2), to said base station (1) and simultaneously launching (25a) a second timer (35) of duration T₁ in said cassette (2);
- executing (26), once said second timer (35) has expired, an image sequence (38) by the X-ray detector (6);
- in case said base station (1) receives said acknowledgement of receipt message (36) before the end of said first timer:
○ launching (30), in said base station (1), a third timer (37) of duration T₂, said durations T₁ and T₂ of said second and third timers (35, 37) being substantially equal so that said image sequence (38) always starts before a radiation sequence (39);
○ executing (30), once said third timer (37) has expired, said radiation sequence (39) by said X-ray generator (3) for a predetermined duration T_{ray};
- ending (28) said synchronisation method in case said base station (1) does not receive said acknowledgement of receipt message (36) before said first timer has expired, without said radiation sequence (39) being executed.

2. The method according to claim 1, **characterised in that** said image sequence (38) is executed for a predetermined duration Tᵢₘₐ, the duration T_{ray} being included in the duration Tᵢₘₐ.

3. The method according to claim 2, **characterised in that** the duration Tᵢₘₐ is equal to the sum of the durations T_{ray} and the duration Tₘₐₓ.

4. The method according to any one of the preceding claims, **characterised in that**, in case said image request (34) is not received by said cassette (2), the synchronisation method is ended (24), without said radiation sequence (39) being executed.

5. The method according to any one of the preceding claims, **characterised in that** said base station (1) and said cassette (2) each comprise a radio module (5, 8) that allows a wireless connection in accordance with standard IEEE 802.11.

6. The method according to any one of the preceding claims, **characterised in that**, after the end of said radiation sequence (39), said method comprises a step that consists in reading information that relates to the X-ray received by said X-ray detector (6).

7. A radiological system comprising:
- a base station (1) that comprises an X-ray generator (3);
- a mobile cassette (2) that comprises an X-ray detector (6);
- wireless communication means (5, 8) between said base station (1) and said cassette (2);
said radiological system being **characterised in that** it comprises:
- means (5) for sending an image request (34) from said base station (1) to said cassette (2);
- means for launching a first timer (32) of duration Tₘₐₓ in said base station (1) at the same time as said image request (34) is sent;
- means (8) for sending an acknowledgement of receipt message (36) from said cassette (2) to said base station (1) upon receipt of said image request (34) by said cassette (2);
- means for launching a second timer (35) of duration T₁ in said cassette (2) at the same time as said acknowledgement of receipt (36) is sent;
- means (7) for controlling, once said second timer (35) has expired, an image sequence (38) for a predetermined duration Tᵢₘₐ;
- means for launching a third timer (37) of duration T₂ in said base station (1) in case said base station (1) receives said acknowledgement of receipt message (36) before said first timer (32) expires, the durations T₁ and T₂ of said second and third timers (35, 37) being substantially equal so that said image sequence (38) always starts before said radiation sequence (39);
- means (4) for controlling, once said third timer (37) has expired, a radiation sequence (39) for a predetermined duration T_{ray};
- means for not executing said radiation sequence in case said base station does not receive the acknowledgement of receipt message before said first timer has terminated.

## Patentansprüche

1. Verfahren zum Synchronisieren zwischen einer Basisstation (1) und einer mobilen Kassette (2) eines radiologischen Systems, wobei die Basisstation (1) einen Röntgenstrahlengenerator (3) umfasst und die Kassette (2) einen Röntgenstrahlendetektor (6) umfasst, wobei die Basisstation (1) und die Kassette (2) drahtlos verbunden sind, wobei das Verfahren **dadurch gekennzeichnet ist, dass** es die folgenden Schritte beinhaltet:
- Senden (22b) einer Bildanforderung (34) von der Basisstation (1) zur Kassette (2) und gleichzeitig Starten (22a) eines ersten Timers (32) mit einer vorbestimmten maximalen Dauer Tₘₐₓ in der Basisstation;
- Senden (25b), von der Kassette (2), einer Nachrichtenempfangsbestätigung (36) nach dem Empfang der Bildanforderung (34) durch die Kassette (2) zur Basisstation (1) und gleichzeitig Starten (25a) eines zweiten Timers (35) mit einer Dauer T₁ in der Kassette (2);
- Ausführen (26), nach Ablauf des zweiten Timers (35), einer Bildsequenz (38) durch den Röntgenstrahlendetektor (6);
- falls die Basisstation (1) die Nachrichtenempfangsbestätigung (36) vor Ablauf des ersten Timers erhält:
○ Starten (30), in der Basisstation (1), eines dritten Timers (37) mit einer Dauer T₂, wobei die Dauer T₁ und T₂ des zweiten und dritten Timers (35, 37) im Wesentlichen gleich sind, so dass die Bildsequenz (38) immer vor einer Strahlungssequenz (39) beginnt;
○ Ausführen (30), nach Ablauf des dritten Timers (37), der Strahlungssequenz (39) durch den Röntgenstrahlengenerator (3) für eine vorbestimmte Dauer T_{ray};
- Beenden (28) des Synchronisationsverfahrens, falls die Basisstation (1) die Nachrichtenempfangsbestätigung (36) nicht vor Ablauf des ersten Timers erhält, wobei die Strahlungssequenz (39) nicht ausgeführt wird.

2. Verfahren nach Anspruch 1, **dadurch gekennzeichnet, dass** die Bildsequenz (38) für eine vorbestimmte Dauer Tᵢₘₐ ausgeführt wird, wobei die Dauer T_{ray} in der Dauer Tᵢₘₐ enthalten ist.

3. Verfahren nach Anspruch 2, **dadurch gekennzeichnet, dass** die Dauer Tᵢₘₐ gleich der Summe der Dauern T_{ray} und der Dauer Tₘₐₓ ist.

4. Verfahren nach einem der vorherigen Ansprüche, **dadurch gekennzeichnet, dass**, falls die Bildanforderung (34) nicht von der Kassette (2) empfangen wird, das Synchronisationsverfahren beendet wird (24), wobei die Strahlungssequenz (39) nicht ausgeführt wird.

5. Verfahren nach einem der vorherigen Ansprüche, **dadurch gekennzeichnet, dass** die Basisstation (1) und die Kassette (2) jeweils ein Funkmodul (5, 8) umfassen, das eine drahtlose Verbindung gemäß dem Standard IEEE 802.11 zulässt.

6. Verfahren nach einem der vorherigen Ansprüche, **dadurch gekennzeichnet, dass** das Verfahren nach dem Ende der Strahlungssequenz (39) einen Schritt beinhaltet, der im Lesen der Informationen besteht, die sich auf die vom Röntgenstrahlendetektor (6) empfangene Röntgenstrahlung beziehen.

7. Radiologisches System, das Folgendes umfasst:
- eine Basisstation (1), die einen Röntgenstrahlengenerator (3) umfasst;
- eine mobile Kassette (2), die einen Röntgenstrahlendetektor (6) umfasst;
- drahtlose Kommunikationsmittel (5, 8) zwischen der Basisstation (1) und der Kassette (2);
wobei das radiologische System **dadurch gekennzeichnet ist, dass** es Folgendes umfasst:
- Mittel (5) zum Senden einer Bildanforderung (34) von der Basisstation (1) zur Kassette (2);
- Mittel zum Starten eines ersten Timers (32) mit einer Dauer Tₘₐₓ in der Basisstation (1) zur selben Zeit wie die Bildanforderung (34) gesendet wird;
- Mittel (8) zum Senden einer Nachrichtenempfangsbestätigung (36) von der Kassette (2) zur Basisstation (1) nach dem Empfang der Bildanforderung (34) durch die Kassette (2);
- Mittel zum Starten eines zweiten Timers (35) mit einer Dauer T₁ in der Kassette (2) zur selben Zeit wie die Empfangsbestätigung (36) gesendet wird;
- Mittel (7) zum Steuern, nach Ablauf des zweiten Timers (35), einer Bildsequenz (38) für eine vorbestimmte Dauer Tᵢₘₐ;
- Mittel zum Starten eines dritten Timers (37) mit einer Dauer T₂ in der Basisstation (1), falls die Basisstation (1) die Nachrichtenempfangsbestätigung (36) vor Ablauf des ersten Timers (32) erhält, wobei die Dauern T₁ und T₂ des zweiten und dritten Timers (35, 37) im Wesentlichen gleich sind, so dass die Bildsequenz (38) immer vor der Strahlungssequenz (39) startet;
- Mittel (4) zum Steuern, nach Ablauf des dritten Timers (37), einer Strahlungssequenz (39) für eine vorbestimmte Dauer T_{ray};
- Mittel zum Nichtausführen der Strahlungssequenz, falls die Basisstation die Nachrichtenempfangsbestätigung nicht vor Ablauf des ersten Timers erhält.
